Europäisches Patentamt

European Patent Office

Office européen des brevets

(11) Publication number: **0 250 370**
**A1**

## EUROPEAN PATENT APPLICATION

(21) Application number: **87830111.8**

(22) Date of filing: **23.03.87**

(51) Int. Cl.⁴: **B 60 G 3/26**
**B 60 G 21/04**

(30) Priority: **25.03.86 IT 6723786**

(43) Date of publication of application:
**23.12.87 Bulletin 87/52**

(84) Designated Contracting States: **DE FR GB IT SE**

(71) Applicant: **CORINT S.r.l.**
**Strada degli Alberoni 18/2**
**I-10133 Torino (IT)**

(72) Inventor: **Cordiano, Ettore**
**Strada degli Alberoni 18/2**
**I-10133 Torino (IT)**

(74) Representative: **Notaro, Giancarlo et al**
**c/o Jacobacci-Casetta & Perani S.p.A. Via Alfieri, 17**
**I-10121 Torino (IT)**

(54) Trailing arms rear suspension without variation of toe angle in straight line and with geometrical understeer when turning.

(57) In a trailing arms rear suspension each arm consists of three elements of which the first one (1, 11) carries the pin (4) or the hub of the wheel and on one side is anchoraged by a longitudinal blade (2, 12) and by a diagonal rod (3, 13), and on the other side is hinged to a lever (5), on its turn hinged to the body, the first element (11, 1) being hingedly connected on the same lever (5) of the other arm, everything arranged in such a way as to compell the hinges (6, 7) of the first elements of the two arms to move together in longitudinal direction. In such a way the toe angle of the two wheels does not change during the springing displacements, equal and of the same sign, whereas in the displacements of opposite sign, which occurs in a bent, the toe angle of the outside wheel increases and that of the inside wheel decreases and become negative, this way building an effect of geometrical understeer depending on the centrifugal force acting on the car and controllable with simple means.

FIG. 1

EP 0 250 370 A1

Bundesdruckerei Berlin

## Description

Trailing arms rear suspension without variation of toe angle in straight line and with geometrical understeer when turning

The present invention relates to a rear suspension of the kind comprising a trailing arm for each wheel and resilient means for the springing.

Suspension of this kind are widely used on modern motor vehicles, both front and rear wheel drive (FWD and RWD), and they have the advantage of being simple, light and requiring a small space for their installation. Generally the rotation axis of the arms is perpendicular to the vehicle longitudinal axis or slightly inclined with respect to said perpendicular. In the first case, during the motion of the vehicle the angle of the wheel relative to the vehicle longitudinal axis, referred to hereinafter as "toe angle", does not change. In the second case, i.e. when said rotation axis is inclined, during the motion of the wheel relative to the body its toe angle does change. This can be exploited in order to give the suspension a geometrical understeer when turning, but it has this drawback: as the toe angle variation occurs not only in a bent but even in straight line, and it depends only on the position between wheel and body, said toe angle varies with the vehicle load and generally increases with it. This causes a greater wear of the tires, which can become very strong even with values of toe angle of the order of 20' ÷ 30'. Suspensions exist with geometries similar to those of front suspensions, which can control better the toe angle variations. But they behave always similarly to the trailing arms suspensions, i.e. they keep the angles constant or let them vary with the load.

Recently suspension have been conceived provided with additional steering devices which make the toe angle vary when turning as a function of the bent severity.

Generally these devices are hydraulically operated and electronically controlled. They are therefore very complex and expensive and their efficiency depends on the one of the additional control system, and hence serious problems may occur.

Object of the present invention is to provide a suspension which overcomes the aforementioned drawbacks, by fully eliminating the toe angle variations due to the load variations and hence during the normal springing of the vehicle, whereas it causes a toe angle variation when turning and a consequent geometrical understeer, both depending on the centrifugal force acting on the vehicle. A further object of the invention is to provide a suspension with a stabilizing effect without the addition of the normally used anti-roll torsion bars.

The object is reached through the invention in that each arm consists of three components of which: a) the first one consists of an inclined element bending resistent both in the vertical and horizontal plane, on which the pin or the hub of the wheel is clamped at one end, said element at the other end being hingedly connected to an anchorage device, preferably consisting of a lever, hingedly connected to the body, and to which also the first element of the other suspension arm is connected, in such a way that the two hinges of said first elements are compelled to move in the same measure in longitudinal direction; b) a second element bending resistent in the vertical plane, hingedly connected at one end to a fixed point of the body and connected to said first element in such a way as to prevent any relative rotation between them round the wheel axis, and to allow even big variations of the distance between its hinge of connection to the body and the hinge of connection of the first element, through its bending deformation or because of the kind of its connection to the first element, and c) of a third element hingedly connected at an end to a fixed point of the body and, at the other end, to one of the first elements, its axis extending in proximity of the crossing of the axis of the second element with the wheel axis, in such a way as to allow the first element to rotate in the horizontal plane, the two hinges of the first elements of the two arms, connected to the anchorage device, being disposed outside and preferably above the plane containing the rotation axis of the two arms (i.e. the axis extending through the fixed hinges of the second and third element of each arm), all that with the purpose to let the toe angles of the wheels vary in a different and most convenient way in straight line and when turning, with the possibility to have in a bent the required under or oversteer law.

The invention furthermore foresees the possibility of shaping the anchoring lever of the first elements of the two arms or the device equivalent to it, in such a way as to prevent their lateral displacements, this way building an anti-roll stabilizing power. Other advantages of the invention will become evident from the following desoription, made with reference to the annexed figures, of which:

- fig. 1 shows a plan view of a suspension according to the invention,

- fig. 2 is a longitudinal view of the same,

- fig. 3 is a transversal view of it,

- fig. 4 shows the detail of the connection between two elements of the arm,

- fig. 5 is a diagramatical plan view of the same suspension,

- fig. 6 is another diagramatical view,

- fig. 7 shows the law of variation of the toe angles of a wheel versus its vertical displacements,

- fig. 8 shows how the toe angles vary as a function of the height of the hinges,

- fig. 9 is a plan view showing the behaviour of the suspension when the hinges cannot move transversally,

- fig. 10 is a variant of fig. 9,

- fig. 11 shows how the transversal forces are transmitted to the suspension elements,

- fig. 12 shows the torque effects,

- fig. 13 shows how the longitudinal forces are transmitted,

- fig. 14 is a suspension with a torsion blade,
- fig. 15 and 16 show a possible embodiment of an anchorage lever.

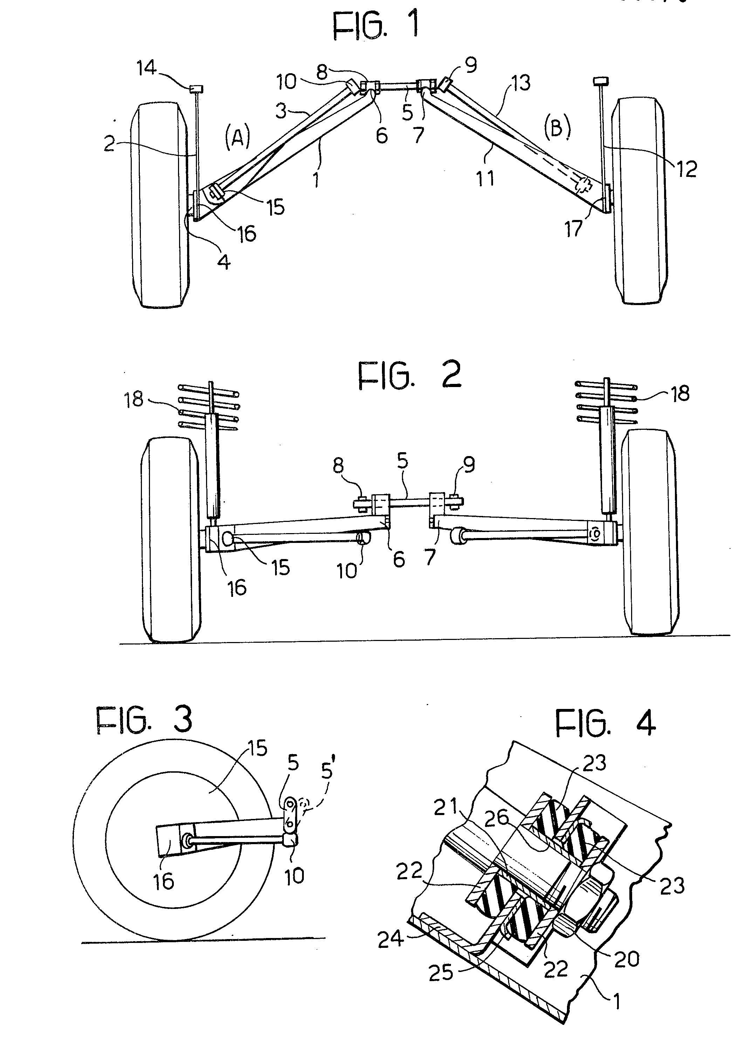

In figg. 1, 2, 3 a suspension according to the invention is shown in plan, longitudinal and transversal view respectively. The arm (A) of the suspension is made up of a first diagonal element 1 on which the wheel pin 4 is bolted, a second longitudinal element 2 and a third, also diagonal, element 3. In the case of figg. 1, 2, 3 it is assumed that the first element consists of a rigid arm, of metal sheet, with a C section, with dimensions decreasing from the wheel toward the opposite end. Said element is connected through the hinge 6 to the fork lever 5 which, in its turn, is connected to the body through bushes 8, 9, which, is assumed, let the same lever free to move transversally, substantially without efforts. The second element consists of a blade with a rectangular section with the longer side vertically disposed. This second element is hingedly connected to the body through bush 14 and at the opposite end to the first element 1, for instance with the same bolts, not indicated in the figure, fastening the wheel pin 4 to arm 1. The third element which acts as strut or tie rod, in the figure consists of a rod 3, hingedly connected to a fixed point of the body by means of bush 10 and, at the opposite end, to element 1, through a mounting 15, of the kind indicated in fig. 4, by way of example. In said fig. 4 the rod 3 has an end with reduced diameter and threaded. Nut 20 clamps spacer 21 and washers 22 to each other and against the abutment on the rod 3. Washers 22 in their turn clamp the two rubber rings 23 against mounting 24 welded on element 1 of the arm A. Cup 25 serves to center the rubber rings 23 and to prevent the direct contact between spacer 21 and bore 26 of mounting 24. The springing medium of the suspension consists of spring 18 arranged coaxially with the shock absorber. In order to semplify the description, in the following it will be assumed that the connection 15 is disposed in point 16 of crossing between axis of rod 3 and blade 2. The resulting error is extremely small.

With this arrangement the suspension behaves in the way described in the following.

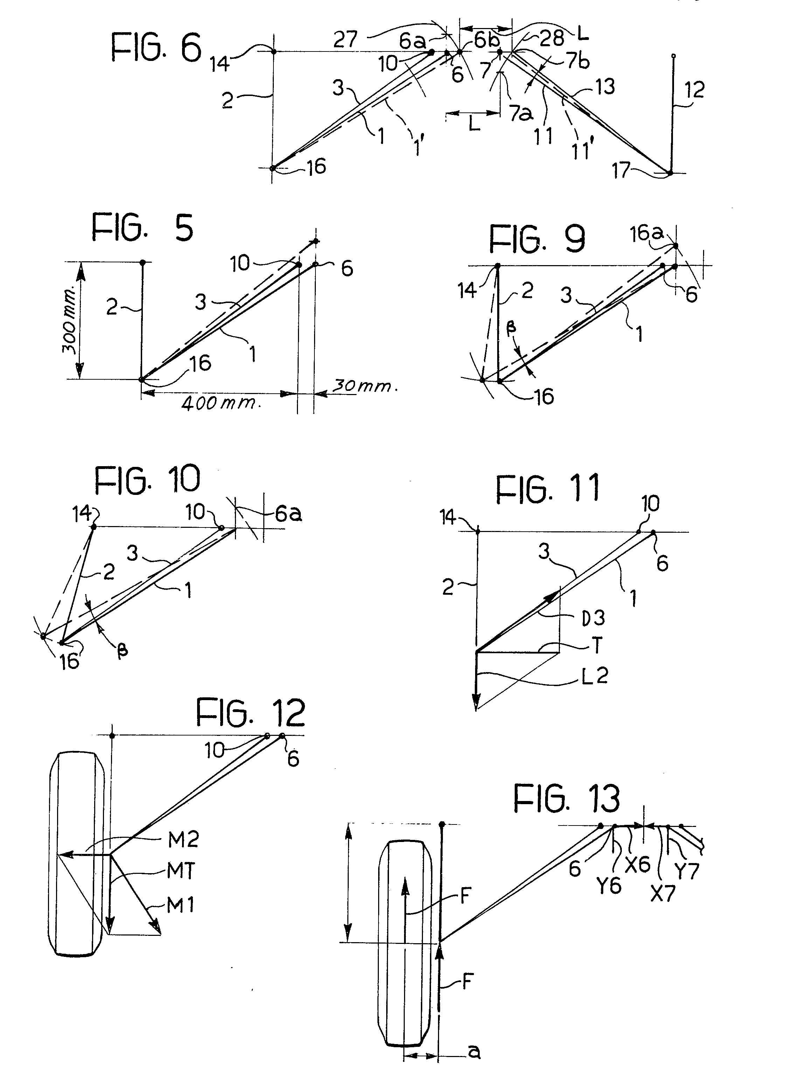

- In the parallel displacements of the wheels, i.e. in the normal springing of the body, the arm rotates round the axis extending through the centers of hinges 10 and 14, which in the figure have been located on an axis perpendicular to the vehicle longitudinal axis. As hinge 6 is higher than axis 10-14, during the springing motion point 6 is compelled to move forward and aft as indicated in plotted line and in enlarged scale in fig. 5. This motion is possible because element 1 can move out of the plane of elements 2 and 3 as a result of the deformation of the hinges of rod 3 and of hinge 6 and as a result of torsion of blade 2. Point 16, being at the same level of the rotation axis, moves practically in a vertical direction. Obviously during these displacements, the rotation axis being perfectly transversal, the two hinges 6, 7 of the two arms A and B move in the same direction, without any constraint, and the wheel remains always parallel with itself, without changing the toe angle. If the angle is initially zero, it continues to be zero.
- If the displacements of the wheels are equal but of opposite sign (assuming the left wheel upwards and the left one downwards, as would occur in a bent rightwards) the hinge 6 of the left arm would tend to move forwards in the position 6a whereas the hinge 7 would move rearwards in the position 7a, as indicated in fig. 6. But because the lever 5 compels the two hinges to move longitudinally in the same measure, they will arrive in the positions 6b and 7b respectively, substantially intermediate between 6a and 7a. The position 6b and 7b, assuming that all hinges are extremely stiff, can be determined, for given positions of 6a and 7a, by finding the two points on the circles 27, 28 which are located on a same transversal line and whose distance is the initial distance L. Practically they are on the transversal line intermediate between 6a and 7a, as appears from the fig. 6. Consequently, elements 1 and 11 are compelled to rotate round the crossing points 16 and 17 of the axis of elements 2 and 3, in the positions 1' and 11' respectively of same fig. 6. Under these conditions the toe angle of the left wheel increases and the angle of the right wheel decreases, both creating an understeer effect, depending on the measure of the wheels displacements. The displacements are depending on the centrifugal force acting on the vehicle, and hence also the understeer effect is depending on the centrifugal force. This effect can be increased or decreased by only increasing or decreasing the hight of hinges 6 and 7 above the rotation axis of the arms. In the diagrams of fig. 7 the law of variation of toe angles $\beta$ of a wheel is indicated, in its displacement upwards or downwards, assuming the other wheel moves in the opposite direction and in the same measure. Line $\underline{a}$ corresponds to the start position whereby wheel center is at the same level of the rotation axis of the arms $(Z=0)$; line $\underline{b}$ corresponds to a position 50 mm. lower than $\underline{a}$ $(Z = -50$ mm.); line $\underline{c}$ indicates the variations of the toe angle in the parallel displacements of the two wheels. The calculation has been made with the dimensions indicated in fig. 5 and assuming the points 6 and 7 are located 30 mm. above the rotation axis of the arms. The wheel displacements are entered on the absciss in millimeter, and the toe angle $\beta$ is entered on the ordinate in minutes. The initial toe angle has been assumed 5'.

The diagram of fig. 8, on the contrary, shows how the toe angle varies with the hight of hinges 6, 7 (entered on the absciss) above the rotation axis, assuming the wheels move 80 mm. relative to each other (a wheel 40 mm. upwards and the other 40 mm. downwards). The values are calculated starting from position $Z=0$ of the diagram of fig. 7. One sees that the variation is zero if the height is zero and become 50' for a height of 60 mm.

This feature allows to obtain a behaviour of the suspension which is very interesting. If the device which connects the two hinges 6 and 7 is such that when the wheels move away from the body the height of said hinges increases, the following happens: if in a bent the accelerator pedal is suddenly released, as, under these conditions, the vehicle rear end moves upwards because of the inertia force, the understeer power - existing because of the roll angle of the vehicle - increases furthermore. This reduces or fully eliminates the oversteering effect which normally occurs under these circumstances.

In order to realize said elevation of the hinges in deceleration, in case the anchorage device is consisting of a lever as 5' of figure 3 it is sufficient to incline its axis, as indicated in flotted line in fig. 3. When, as a result of a deceleration, the wheels lower relative to the body and the two hinges are compelled to move rearwards, they move also upwards relative to the rotation axis, causing an increase of the understeering power definable according to diagram of fig. 8.

In the case the anchorage device of the two hinges 6, 7 is such as to prevent their transversal displacements, except for small elastic motions, there is another important feature in the behaviour of the suspension. In this case in fact, its operation changes in the following way:

- there is no difference in the parallel displacements. The two hinges 6, 7 move together longitudinally as seen before in fig. 5;
- on the contrary, during the displacements in opposite direction, as the transversal displacements of hinges 6, 7 are prevented, internal forces build in the system which tend to contrast such displacements. The system hence behaves as if it were provided with an anti-roll device, whose stiffness is depending on the distance of hinges from the rotation axis, the stiffness of the rubber elements 23 of connection between element 1 and diagonal rod 3, and on stiffness of hinges of connection to the body. The behaviour can be described with reference to fig. 9 in which the horizontal displacements are in enlarged scale.

Assuming there is no transversal displacement, hinge 6 should move in the position 6a. But hinge 7, which moves in the opposite direction, as seen in fig. 6, compels hinge 6 to return practically in its initial position. This is possible because hinge 10 and rubber rings 23 of mounting 15 can deform. This way an axial force raises on element 1, extending through points 6 and 16 which, the arm 1 being practically parallel with rod 3, forces almost entirely on rod 3 and gives a very small component on blade 2 and hinge 14. Obviously the axial force acts along the line 6-16 because the clamp reaction exterted by blade 2 in the horizontal plane is negligible and because rod 3 is hingedly connected in point 15 to element 1. The yieldings of hinge 14 are small and do not influence the rotation of element 1. In reality, even yieldings on the hinges 6, 7 there will be, and therefore the toe angle $\beta$ will be smaller than the one indicated in fig. 9. Anyway the stiffness of hinge 10 and rubber ring 23, and the height of hinges 6, 7 above the rotation axis can be fixed in such a way as to obtain the required variation of toe angles. With the same method the stabilizing power can be varied, certainly inside a limited field in order to not create too strong internal forces.

In the last considered case, where the transversal displacements of hinges 6, 7 are hindered, the variations of toe angles can be increased by exploiting the internal forces acting on the elements of the suspension. In fact, by disposing the blade 2 with a certain angle instead of a longitudinally, as indicated in fig. 10, as a result of the yielding of mounting 15 and hinge 10, point 16 rotates round hinge 14 and move forwards, increasing the rotation of element 1.

In figg. 11, 12, 13 is indicated how the transversal and longitudinal (braking or driving) forces are distributed among the various elements of the suspension under the assumption that stiffness of hinges 10, 14 and mounting 15 be much greater than the stiffness of hinges 6, 7.

In this case point 16 can be considered fixed and consequently:
- transversal force T act on said point 16, as indicated in fig. 11 and builds the components D3 along the axis of diagonal rod 3, and L2 along blade 2;
- the moment MT of transversal force T with respect to point 16 (existing because force T is acting in the point of contact between wheel and road surface) is transmitted upon hinges 6 and 7 in the way in the following described with reference to fig. 12. Blade 2, in fact, can react only with a torque whose moment vector M2 is parallel with wheel axis. Element 1 can react with a torque whose moment vector M1 is perpendicular to the line extending through hinge 6 and point 16. Moment vector MT is obviously longitudinal. Fig. 6 shows how MT is resolved into components M1 and M2. Obviously this is possible because element 1 and blade 2 are connected in such a way that they cannot rotate between each other round the wheel axis. There is to add, furthermore, that the preceding description is worth only in a first approximation; if hinges 6 and 14 are not on a perfectly transversal axis or lever 5 axis is inclined relative to the vertical, other forces raise on rod 3 and the same spring 17 which, however, do not change substantially the situation,
- the longitudinal force F, driving or braking, acts upon point 16, mainly on blade 2, and its moment with respect to point 16 is balanced by a reaction of hinge 6 (or 7) whose components X6, Y6 (and X7, Y7 of fig. 13) are depending on the forces F acting on the single wheels, on the stiffness of all hinges 6, 7, 8, 9, 10, 10a, 14, 14a, 15, 15a, and on the same stiffness of elements 1 and 11. In particular, when the forces F on both wheels are equals, it is easy to demonstrate that the components X6, Y6 are zero and the reactions of the hinges are consisting only on the components Y6, Y7 are zero and the reactions of the hinges are consisting only on the components X6, X7 given by $X6 = X7 = F.a/b$.

The preceding considerations relative to the resolution of the force are worth, obviously, either if hinges 6, 7 can move transversally or not.

A further advantage offered by the proposed suspension is the following. In the normally used trailing arms suspensions, the hinges must be very stiff, particularly in radial direction, in order to avoid that the transversal cornering forces build negative variations of toe angles, with a geometrical oversteering effect. But by increasing the stiffness of the hinges, the ability of the suspension to absorb the small shocks of the wheels decreases and the suspension becomes harsher. With a suspension of the proposed kind the radial flexibility of the hinges can be increased, improving the comfort without losing cornering stability. In fact is possible to compensate the oversteer due to the hinges yieldings by means of the geometrical understeering effect hereinabove described.

Moreover it is obvious that a suspension of this kind can be fitted to a FWD as well RWD car. The ancorage lever 5 can be conformed in such a way as to let go through the propeller-shaft which drives the rear differential gear. This last drives the wheels through axle shafts provided with sliding universal joints.

In figg. 1, 2, 3 it has been assumed to use as springing medium a coil spring 18, coaxial with the shock absorber. It is evident that any other kind of springing means can be adopted. For instance blade 2 can be clamped on one end of a torsion bar, fastened at the other end on the body. Under these conditions the blade will be more torsion deformed, because its end hing cannot rotate round the blade axis.

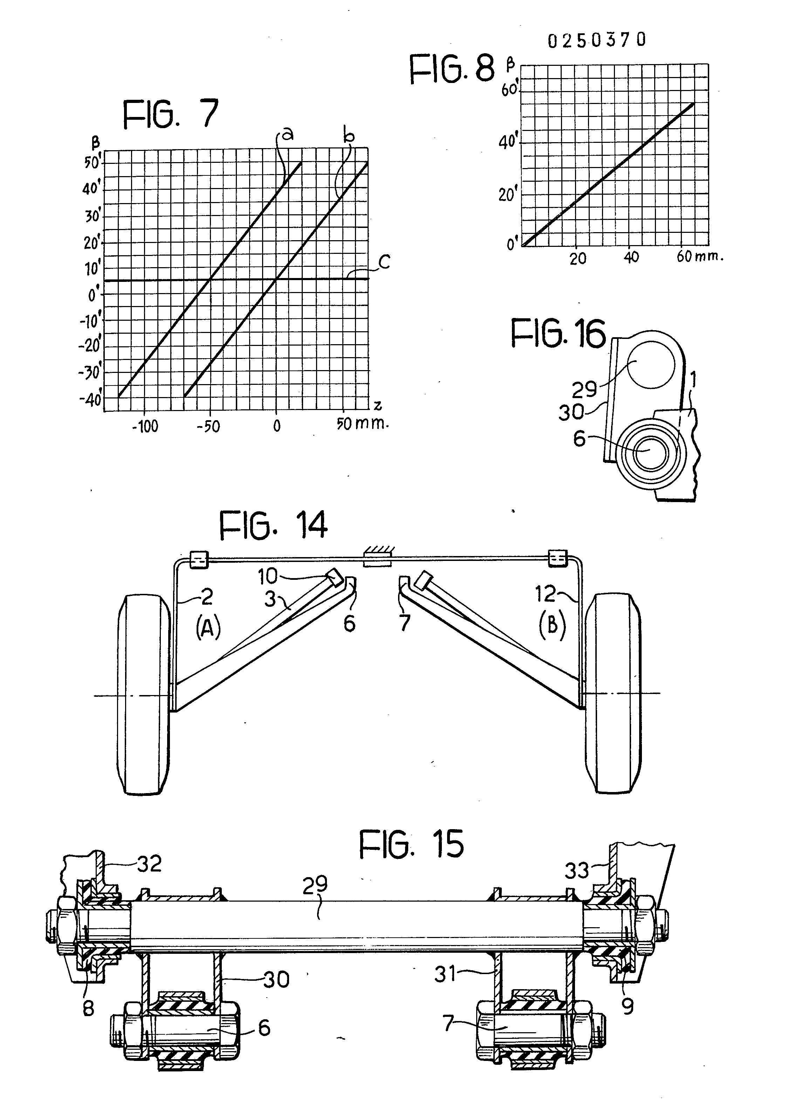

It is also possible to use a solution indicated in fig. 14, where a blade 2 is formed by a longitudinal section of a blade bent at 90° and supported on the transversal section in proximity of the bent. The rubber mounting is made in such a way that it can bear the vertical loads of the wheels and let the blade free to rotate. The inside end of the transversal section is clamped on the body or on an auxiliary frame, so that the transversal section acts as torsion bar. If there is not a propeller-shaft, a single blade can be used for both wheels, made up of a transversal section, clamped in the middle of the vehicle, and two longitudinal sections equivalent to blades 2, 12 of figg. 1, 2, 3.

Finally in figg. 15, 16 is indicated, by way of example only, a possible embodiment of a lever 5 for the anchorage of hinges 6, 7. Lever 5 consists of a shaft 29 on which the fork appendixes 30, 31 are welded which bear hinges 6, 7 of arms 1, 11 of the suspension. The projecting ends of the shaft are hingedly connected to brakets 32, 33 through bushes 8, 9. The brakets 32, 33 are connected, in a way not indicated in the figure, directly to the body or through an auxiliary frame. It is to be marked that the hinges 6, 7, 8, 9 can be of small dimensions because the forces they have to bear are rather small and for a short time: essentially during a cornering or a braking. The acceleration forces are very low.

It is obvious that the illustrated solutions are only by way of non limitative example and the invention can be varied in various ways with the purpose to increase its efficiency and reduce the costs, without departing therefore from the scope of the invention.

## Claims

1. A trailing arms rear suspension for motorvehicles of the kind comprising:

- a control arm for each wheel
- a resilient means for the springing

characterized in that each arm consists of three components of which:

a) the first one consists of an inclined element (1), bending resistent both in the vertical and horizontal plane, on which the pin (4) or the hub of the wheel is clamped at one end, with their wheel bearings, said element at the other end being hingedly connected (6, 7) to an anchorage device, preferably consisting of a lever (5), hingedly connected to the body, and to which also the first element (11) of the other suspension arm is connected, in such a way that the two hinges of said first elements (6, 7) are compelled to move in the same measure in longitudinal direction;

b) a second element (2), bending resistent in the vertical plane, is hingedly connected at one end to a fixed point (14) of the body and connected to said first element in such a way as to prevent any relative rotation between them round the wheel axis, and to allow even big variations of the distance between its hinge (14) of connection to the body and the hinge (6) of connection of the first element, through its bending deformation or because of the kind of its connection to the first element, and

c) a third element (3) is hingedly connected at one end to a fixed point (10) of the body and, at the other end (15), to one of the first elements, its axis extending in proximity of the crossing (16) of the axis of the second element (2) with the wheel axis, in such a way as to allow the first elements of the two arms, connected to the anchorage device, being disposed outside and preferably above the plane containing the rotation axis of the two arms (i.e. the axis extending through the fixed hinges of the second (14) and third (10) element of each arm), all that with the purpose to let the toe angles of the wheels vary in a different and most convenient way in straight line and when turning, with the possibility to have in a bent the required under or oversteer law.

2. Rear suspension according to Claim 1 characterized in that the hinge (6, 7) of the first element, at the end opposite to the wheel and connected to the device or lever (5) of anchorage is located above the axis extending through the fixed hinges of the second (14) and third (10) element of each arm, in such a way that during the jounce displacements said hinge of first element is compelled to move longitudinally and forwards, compelling, hence, the corresponding hinge of the other arm to move substantially in the same measure.

3. Rear suspension according to Claims 1 and 2 characterized in that the device or lever (5) to which the hinges (6, 7) of the end of the first element of the arms are connected, is shaped in such a way as to prevent substantial transversal displacements of the same hinges.

4. Rear suspension according to Claims 1, 2, 3 characterized in that the second element (2) of the arms consists of a horizontal blade, with the longer side of its cross-section disposed vertically, and therefore allowing, as a result of its bending deformability, even big variation of the distance between its hinge (14) of anchorage to the body and the one (6) of the first element.

5. Rear suspension according to Claims 1, 2, 3, 4 characterized in that the axis extending through the fixed of second (14) and third (10) element is substantially horizontal and perpendicular to the longitudinal axis of the vehicle, the hinge (6) of the first element being located above said axis with the result that the variations of toe angle of each wheel are small or zero during their equal displacements and of same sign, whereas the variations are much greater and of opposite sign and they increase with the value of the same displacements.

6. Rear suspension according to Claims 1, 2, 3 characterized in that the device (5) to which the two hinges (6, 7) of the first element of the arms compels the two hinges to move upwards when they move rearwards in the rebound displacements of the wheels and, in case said device is realized with a lever (5) hingedly connected to the body, this being obtained by suitably inclining the same lever (5) under full load conditions.

7. Rear suspension according to Claims 1, 2, 3, 4 characterized in that the blade (2) which forms the second element of the arms is clamp connected to a torsion bar which acts as springing medium of the suspension.

8. Rear suspension according to Claims 1, 2, 3, 4 characterized in that the blade (2) which forms the second element of the arm is the substantially longitudinal part of a blade substantially bent at 90°, the transversal section of the same blade taking the function of torsion bar for the springing.

FIG. 1

FIG. 2

FIG. 3

FIG. 4

0250370

FIG. 6

FIG. 5

FIG. 9

FIG. 10

FIG. 11

FIG. 12

FIG. 13

FIG. 7

FIG. 8

FIG. 16

FIG. 14

FIG. 15

0250370

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 480 441 (VOLKSWAGEN) <br> * Figures 1,5; page 4, line 20 - page 6, line 20 * | 1,4 | B 60 G 3/26 <br> B 60 G 21/04 |
| A | DE-A-2 430 679 (PORSCHE) <br> * Figure; page 4 * | 1,4,7 | |
| A | DE-U-6 605 527 (VOLKSWAGEN) <br> * Figures 1-3; page 3, line 4 - page 6, line 3 * | 1,4 | |
| A | EP-A-0 098 812 (CORINT) <br> * Figures 4-7; page 2, lines 15-29 * | 1,4,8 | |
| A | EP-A-0 114 790 (FIAT) | | TECHNICAL FIELDS SEARCHED (Int. Cl.4) |
| | | | B 60 G |

The present search report has been drawn up for all claims

| Place of search | Date of completion of the search | Examiner |
|---|---|---|
| THE HAGUE | 29-07-1987 | TORSIUS A. |